## Europäisches Patentamt
## European Patent Office
## Office européen des brevets

(11) Veröffentlichungsnummer: **0 231 227**
**B1**

(12) **EUROPÄISCHE PATENTSCHRIFT**

(45) Veröffentlichungstag der Patentschrift: 03.10.90

(51) Int. Cl.⁵: **B 60 R 22/46**

(21) Anmeldenummer: 86904111.1

(22) Anmeldetag: 23.07.86

(86) Internationale Anmeldenummer:
PCT/DE86/00302

(87) Internationale Veröffentlichungsnummer:
WO 87/00809 12.02.87 Gazette 87/04

(54) KUPPLUNGSVORRICHTUNG FÜR DIE WICKELWELLE EINES SICHERHEITSGURTAUFROLLERS MIT RÜCKSTRAMMVORRICHTUNG.

(30) Priorität: 06.08.85 DE 3528162

(43) Veröffentlichungstag der Anmeldung:
12.08.87 Patentblatt 87/33

(45) Bekanntmachung des Hinweises auf die Patenterteilung:
03.10.90 Patentblatt 90/40

(84) Benannte Vertragsstaaten:
DE FR GB

(56) Entgegenhaltungen:
EP-A-0 093 238
EP-A-0 093 240
EP-A-0 153 726
DE-A-3 040 667
DE-A-3 400 177
FR-A-2 256 771
US-A-3 138 405
US-A-3 695 545

(73) Patentinhaber: Allied Engineering Company S.A.
15, Boulevard Roosevelt
L-2450 Luxembourg (LU)

(72) Erfinder: KEBSCHULL, Bernd
Wohldweg 15
D-2358 Oersdorf (DE)
Erfinder: KOCK, Hans-Otto
Segeberg Strasse 42
D-2359 Kisdorf (DE)
Erfinder: LACHER, Bernd
Reeperbahn 17
D-2300 Kiel (DE)

(74) Vertreter: Weber, Dieter, Dr. et al
Dr. Dieter Weber und Dipl.-Phys. Klaus Seiffert
Patentanwälte Gustav-Freytag-Strasse 25
Postfach 6145
D-6200 Wiesbaden 1 (DE)

Courier Press, Leamington Spa, England.

**Beschreibung**

Die Erfindung betrifft eine Kupplungsvorrichtung für die Wickelwelle eines Sicherheitsgurtaufrollers mit Rückstrammeinrichtung, mit einem Rahmen und/oder einem Gehäuse für die Befestigung und Aufnahme der Aufrollmechanik und wenigstens eines Teiles der Rückstrammeinrichtung, mit einem flexiblen Zugmittel, welches an einem Ende fest mit einer Antriebsvorrichtung in Verbindung steht, mit einem drehbar gelagerten Außenrad und einem ebenfalls drehbar gelagerten Innenrad, deren Achsen im wesentlichen parallel zur Achse der Wickelwelle verlaufen, von denen eines mit der Wickelwelle fest verbunden ist und das andere eine Wickelvorrichtung für das Zugmittel aufweist und zumindest unter Zugbelastung mit dem anderen Ende des Zugmittels fest verbunden ist und welche im Ausgangszustand im wesentlichen konzentrisch zueinander angeordnet sind.

Eine derartige Kupplungsvorrichtung ist bekannt. Diese arbeitet nach dem Prinzip eines Freilaufes, auf welchem zwischen dem Außen- und dem Innenrad planetenartig weitere Rollen angebracht sind, deren Achsen in Führungsnuten beweglich sind und die eine Drehung des Außen- und des Innenrades gegeneinander im wesentlichen nur in eine Richtung zulassen und die sich bei einer Relativbewegung des Außen- und des Innenrades in umgekehrter Richtung in entsprechenden Engpässen des Zwischenraumes zwischen Außen- und Innenrad verkeilen und so die drehenden Räder gegeneinander blockieren. Bei der bekannten Kupplungsvorrichtung ist als Zugmittel ein Stahlseil an dem Außenrad befestigt und um dieses herumgewickelt. Das andere Ende des Seiles ist mit einer Antriebsvorrichtung verbunden, welche im Fall ihrer Auslösung eine große Beschleunigungskraft auf das Zugseil ausübt, wobei das Außenrad ebenso beschleunigt in Blockierrichtung gedreht wird und dabei nach dem Blockieren das Innenrad mitnimmt, welches seinerseits mit der Wickelwelle verbunden ist und so den Gurt aufwickelt und strafft.

Durch die sehr große Kraft, welche die Antriebsvorrichtung über das Zugmittel und das Außenrad auf die Kupplungseinrichtung ausübt, werden Außen- und Innenrad so fest gegeneinander blockiert, daß sie sich selbständig nicht voneinander lösen und nach dem Öffnen des sie aufnehmenden Gehäuses auch mit mechanischen Hilfsmitteln nur schwer voneinander zu trennen sind.

Dies bedeutet, daß der Gurt nach dem Auslösen der Rückstrammeinrichtung in seiner normalen Funktion praktisch nicht mehr zu verwenden ist, da mit dem Blockieren der Wickelwelle auch der Gurt blockiert ist. Dabei ist der Gurt durch die Rückstrammeinrichtung derart straff angezogen, daß er von einer Person, die ihn vorher angelegt hatte und nach dem Auslösen der Rückstrammeinrichtung gelöst hat, nicht wieder angelegt werden kann.

Dies ist insofern von Nachteil, als die Rückstrammeinrichtung aus Sicherheitsgründen schon bei relativ kleinen Unfällen oder unbeabsichtigt durch Fehlfunktion des Oberkörpers ausgelöst wird, so daß es nach einem derartigen Vorfall sinnvoll und angebracht wäre, den Gurt wieder anzulegen und in seiner normalen Funktion ohne Rückstrammeinrichtung weiterzubenutzen, um beispielsweise zu einer Werkstatt zu fahren.

Aus der DE-OS 33 28 874 ist eine andere Kupplungsvorrichtung bekannt, bei welcher jedoch kein Außenrad vorhanden ist sondern stattdessen ein im Abstand um das Innenrad herumgeführtes Seil sich beim Auslösen der Antriebsvorrichtung zusammenzieht und so an das Innenrad anlegt und dieses antreibt. Auch bei dieser Ausführungsform ist jedoch nach dem Rückstrammvorgang die Reibung zwischen Seil und Innenrad zu hoch, als daß der Gurtaufroller noch seine normale Funktion wahrnehmen könnte. Dies gilt insbesondere dann, wenn sich eine oder mehrere Seilwicklungen aufeinanderlegen und verklemmen.

Beide der genannten Kupplungsvorrichtungen haben darüberhinaus den Nachteil, daß bei dem Rückstrammvorgang ein gewisser, nicht exakt kalkulierbarer Schlupf auftritt, der aus Sicherheitsgründen eine entsprechend größere Dimensionierung der Antriebsvorrichtung für das Zugmittel erfordert.

Bei der zuletzt erwähnten Kupplungsvorrichtung treten darüberhinaus erhebliche Reibungsverluste auf, wodurch der Wirkungsgrad der Rückstrammeinrichtung weiter herabgesetzt wird.

Aus der EP-A-153 726, die eine Druckschrift im Sinne von EPÜ Artikel 54 (3) ist, ist ebenfalls eine Rückstrammeinrichtung bekannt, welche für die kraftschlüssige Verbindung zwischen einer Seilscheibe und der Wickelwelle ein beweglich gelagertes Rad aufweist. Dieses beweglich gelagerte Rad weist jedoch keine Wickelvorrichtung für das Zugmittel auf, sondern dient als zusätzliches Zwischenglied zwischen einer konzentrisch zur Wickelwelle gelagerten Seilscheibe, wobei die Achsen von Seilscheibe und Wickelwelle relativ zueinander fest sind.

Gegenüber dem eingangs genannten Stand der Technik liegt der vorliegenden Erfindung die Aufgabe zugrunde, eine Kupplungsvorrichtung für die Wickelwelle eines Sicherheitsgurtaufrollers mit Rückstrammeinrichtung und den eingangs genannten Merkmalen zu schaffen, welche nach dem Rückstrammvorgang auch ohne äußere Eingriffe die Wickelwelle frei laufen läßt, weniger Schlupf und einen besseren Wirkungsgrad hat als die bekannte Kupplungsvorrichtung und damit die Verwendung einer kleiner dimensionierten Antriebsvorrichtung ermöglicht.

Diese Aufgabe wird dadurch gelöst, daß das Außenrad und das Innenrad durch eine Zugbelastung des Zugmittels im wesentlichen senkrecht zu ihren Achsen relativ zueinander beweglich angeordnet sind, daß nach einer entsprechenden Verschiebung mindestens einer der beiden Achsen durch eine Zugbelastung des Zugmittels die Außenseite des Innenrades mit der Innenseite des Außenrades krafatschlüssig in Verbindung steht und daß die Verbindung zwischen Außenrad und Innenrad durch eine Rückholanordnung wieder trennbar ist.

Dabei ist es prinzipiell ohne Bedeutung, welches der beiden Räder mit dem Zugmittel und welches mit der Wickelwelle fest verbunden ist. Weiterhin können die beiden relativ zueinander beweglichen Achsen der im Ausgangszustand konzentrisch angeordneten Räder beide auch relativ zum Gehäuse bzw. zum Rahmen des Sicherheitsgurtaufrollers beweglich sein, oder aber eine der beiden Achsen ist jeweils fest relativ zum Rahmen bzw. Gehäuse des Gurtaufrollers, während die andere Achse relativ zu jener und damit auch relativ zum Rahmen beweglich angeordnet ist. Dabei ist jedoch darauf zu achten, daß durch die Zugbelastung des Zugmittels auf die jeweils bewegliche Achse eine Kraft ausgeübt wird, durch welche die im Ausgangszustand zusammenfallenden Achsen relativ zueinander verschoben werden, bis die Außenseite des Innenrades an der Innenseite des Außenrades kraftschlüssig anliegt und eine weitere radiale Verschiebung der Achsen gegeneinander nicht mehr möglich ist. Eine Rückholanordnung übt dabei eine Kraft auf die Räder bzw. damit verbundenen Teile aus, welche die Verschiebung der beiden Achsen gegeneinander nach dem Rückstrammvorgang zumindest teilweise wieder rückgängig macht und so die Verbindung zwischen Außen- und Innenrad wieder trennt.

Die Kraftwirkung des Zugmittels, welches durch die Antriebsvorrichtung angespannt wird und durch Abrollen des mit ihm verbundenen Rades dieses Rad und über die Kupplungsvorrichtung auch das jeweils andere Rad und die damit verbundene Wickelwelle antreibt, kann auf vielfältige Weise zur Verschiebung der Achsen der beiden Räder relativ zueinander genutzt werden. So ist beispielsweise die Führung des Zugmittels bzw. Zugseiles über zwei Umlenkrollen denkbar, welche jeweils mit einer Achse oder der Aufhängung je eines der beiden Räder verbunden sind und so beim Anspannen des Zugseiles die Verschiebung der Achsen relativ zueinander bewirken. Eine einfachere Methode besteht darin, ein bewegliches Rad mit dem Zugseil zu verbinden und durch eine exzentrische Lagerung in radialer Richtung relativ zum zweiten Rad beweglich anzuordnen, so daß bei einer Zugbelastung des Zugseiles ein Drehmoment bezüglich des exzentrischen Lagerpunktes wirkt, durch welches das Rad um diesen Lagerpunkt gedreht und somit seine Achse relativ zur Achse des zweiten Rades verschoben wird. Dabei ist jedoch darauf zu achten, daß das Drehmoment, welches bezüglich des Auflagepunktes wirkt, nicht gerade durch das Drehmoment kompensiert wird, welches mit der Drehimpulsän derung des von dem Zugseil beschleunigten Rades verknüpft ist. In der Praxis bedeutet dies, daß der exzentrische Lagerpunkt außerhalb eines schmalen Streifens beiderseits einer Fluchtlinie liegen sollte, welche dem Verlauf des zwischen Antriebsvorrichtung und Rad frei verlaufenden Zugseiles folgt. Die Breite dieses Streifens kann unter anderem auch von der Oberflächenbeschaffenheit und der Art der Verbindung zwischen Außen- und Innenrad abhängen. Ebenso ist die Lage und der Verlauf dieses Streifens davon abhängig, ob der Lagerpunkt in Zugrichtung des Seiles gesehen oberhalb oder unterhalb der Radachse liegt.

Dabei kann der Lagerpunkt gebildet werden beispielsweise durch eine Drehbefestigung oder durch den jeweiligen Berührungspunkt an einer Führungsschiene oder an Anschlagnocken.

Eine derartige Kupplungsvorrichtung hat den Vorteil, daß die Verbindung zwischen Außen- und Innenrad unabhängig von ihrer Art durch die Rückholanordnung leicht getrennt werden kann, da die Achsen der beiden in Verbindung stehenden Räder relativ zueinander beweglich sind und diese Beweglichkeit unabhängig von der kraftschlüssigen Verbindung zwischen den Rädern ist und nur durch die Zugbelastung des Zugmittels aufrechterhalten wird. Dabei ist selbstverständlich davon auszugehen, daß die Rückstellkraft der Rückholanordnung deutlich geringer ist als die im Falle des Auslösens der Rückstrammeinrichtung durch das Zugmittel auf die bewegliche(n) Achse(n) ausgeübte Kraft. Da die Zugkraft des Zugmittels auch unmittelbar auf die bewegliche(n) Achse(n) wirkt, wird die Verbindung zwischen Außen- und Innenrad auch unmittelbar hergestellt, so daß praktisch kein Schlupf vorhanden ist.

Abgesehen von der unvermeidlichen Lagerreibung und einer gewissen minimalen Anfangsreibung bei der ersten Berührung zwischen Innen und Außenrad treten keinerlei Reibungskräfte auf, so daß die Rückstrammeinrichtung entsprechend kleiner und schwächer ausgelegt werden kann, ohne daß die Wirksamkeit des Rückstrammvorganges dadurch beeinträchtigt wird.

Schließlich kann die Wickelwelle nach erfolgtem Rückstrammvorgang und nach der Entriegelung der Aufrollautomatik wieder frei bewegt werden, da die Verbindung zwischen Außen- und Innenrad durch die Rückholanordnung getrennt wird.

Zweckmäßigerweise ist dabei nach der Erfindung vorgesehen, daß die Rückholanordnung zum Aufbringen einer Rückstellkraft in Richtung der Verbindungslinie der beiden relativ zueinander verschobenen Achsen im wesentlichen aus einer Feder besteht, welche mit ihrem einen Ende an dem Außenrad bzw. deren Lager und/oder damit fest verbundenen Teilen und mit ihrem anderen Ende an dem Innenrad bzw. deren Lager und/oder damit fest verbundenen Teilen angreift.

Eine derartige Feder kann beispielsweise eine einfache Schenkelfeder oder eine Schraubenfeder sein, welche die gegeneinander verschobenen Räder wieder in eine konzentrische Lage drückt oder zieht.

Ein derartiges Federelement ist einfach und preiswert herzustellen und anzubringen. Die Stärke der Federkraft muß dabei für eine sichere Rückstellung des Rades bzw. der Räder sorgen, muß jedoch gleichzeitig auch deutlich kleiner sein, als die von dem Zugmittel ausgeübte Kraft, welche die Trennung der beiden Achsen und damit die Verbindung der beiden Räder bewirkt. Diese Forderung ist leicht zu erfüllen, da die am Zugseil auftretenden Kräfte bei Auslösen der Rückstrammeinrichtung, welche zumindest teilweise für den Verbindungsvorgang genutzt werden können, sehr groß sind. Die bekannten Rückstrammeinrichtungen bestehen im allgemeinen aus einem Kolben, de mit einem Zugseil fest verbunden und in einem Kolben beweglich angeordnet ist und der bei Auslösen der Rückstrammeinrichtung durch eine Gaspatrone in das Innere des Kolbens hineingeschossen wird und dabei in sehr kurzer Zeit und mit sehr großer Kraft das Zugseil anzieht und somit den Rückstrammvorgang bewirkt.

In einer bevorzugten Ausführungsform der Erfindung ist vorgesehen, daß das Innenrad fest mit der Wickelwelle verbunden und das Außenrad mit dem Zugmittel verbunden und in einer zu seiner Achse im wesentlichen senkrechten Ebene relativ zur bezüglich des Rahmens ortsfesten Achse des inneren Rades beweglich ist.

Diese Ausführungsform hat konstruktiv einige Vorteile. Das Zugseil kann auf den konstruktiv variablen Radius des äußeren Rades gewickelt werden, so daß unter Umständen nur eine einzige Wicklung erforderlich ist. Weiterhin braucht das Zugseil nicht am äußeren Rad vorbeigeführt zu werden, so daß sich durch die beiden vorgenannten Maßnahmen die Bautiefe der Kupplungsvorrichtung deutlich verringert. Gleichzeitig erhält man zum einen durch Änderung des Wikkelradius des Seiles, zum anderen durch den unterschiedlichen Radius der beiden Räder im Berührungspunkt die Möglichkeit, ein entsprechendes Übersetzungsverhältnis zu beeinflussen.

Dagegen kann es jedoch auch zweckmäßig sein, wenn gemäß der Erfindung das Außenrad fest mit der Wickelwelle verbunden ist und das Innenrad mit dem Zugmittel verbunden und in einer zu seiner Achse im wesentlichen senkrechten Ebene relativ zur bezüglich des Rahmens ortsfesten Achse des Außenrades beweglich angeordnet ist.

Eine derartige Ausführungsform wird man wählen, wenn beispielsweise ein Untersetzungsverhältnis zwischen Antrieb und Wickelwelle gewünscht ist. Dies kann der Fall sein, wenn die durch die Antriebsvorrichtung zur Verfügung stehende Kraft klein ist, das Zugseil jedoch über eine längere Strecke bewegt werden kann. Bei dieser Ausführungsform muß das Zugseil in axialer Richtung an dem Außenrad vorbeigeführt und auf eine entsprechende Wickelvorrichtung des Innenrades aufgewickelt werden. Zur weiteren Unter- bzw. Übersetzung kann die Wickelvorrichtung auch einen größeren bzw. kleineren Radius haben als das Innenrad.

Bei einer Rückholanordnung gemäß der Erfindung ist als eine Ausführungsform auch vorgesehen, daß das kraftschlüssig mit dem bezüglich seiner Achse festen Rad in Verbindung stehende bewegliche Rad bei entlastetem Zugmittel bezüglich einer durch den Schwerpunkt des beweglichen Rades und der mit ihm beweglichen Teile verlaufenden, vertikalen Linie einseitig in einem Punkt gelagert ist und daß dieses Rad in der zum festen Rad konzentrischen Lage in mindestens zwei Punkten stabil gelagert ist.

Bei dieser Ausführungsform wird also auf eine Feder als Rückstellelement verzichtet und das bewegliche Rad wird stattdessen so aufgehängt, daß es unter dem Einfluß der Schwerkraft in die zum festen Rad konzentrische Lage zurückbewegt wird. Dies erreicht man durch eine bezüglich des Schwerpunktes einseitige und damit instabile Lagerung des aus der konzentrischen Lage herausbewegten Rades, während in der konzentrischen Lage des Rades dieses stabil an mindestens zwei Punkten aufliegt, wobei diese zwei Punkte vorzugsweise beiderseits der vertikalen Schwerpunktlinie angeordnet sind.

Gemäß der Erfindung ist in einer bevorzugten Ausführungsform das bewegliche Rad in einer Lagerplatte gelagert, die um einen exzentrisch zum beweglichen Rad liegenden Zapfen in einer zur Achse des beweglichen Rades im wesentlichen senkrechten Ebene schwenkbar angeordnet ist.

Auf diese Weise wird die Achse des beweglichen Rades zwangsweise auf einem Kreisbogen um den Lagerzapfen geführt, wobei an einem Punkt des Kreisbogens gerade die konzentrische Lage zum bezüglich der Lage seiner Achse festen Rad gegeben ist. Sofern nun die Verbindungslinie zwischen Lagerzapfen und Achse des festen Rades und einer in Richtung des frei laufenden Zugseils verlaufenden Linie deutlich von null bzw. 180° verschieden ist, also z.B. 30° oder 150°, wirkt bei einer Zugbelastung des Zugmittels immer ein Drehmoment auf das bewegliche Rad bezüglich des Lagerzapfens, so daß dementsprechend eine Verschiebung der Achse des beweglichen Rades entlang des erwähnten Kreisbogens erfolgt, bis das bewegliche Rad am festen Rad anliegt und damit die weitere Bewegung entlang des Kreisbogens gestoppt wird.

Dabei ist es zweckmäßig, wenn der Lagerzapfen an der Lagerplatte deutlich außerhalb des beweglichen Rades angebracht ist, weil auf diese Weise das erwähnte Drehmoment wegen des größeren Hebelarmes ebenfalls entsprechend groß ist.

Bei einer anderen Ausführungsform der Erfindung ist vorgesehen, daß das bewegliche Rad mit seiner Außenseite oder mit einem in axialer Richtung über das bewegliche Rad hinausragenden, kreisförmigen Führungsrand an mindestens einer bezüglich des Rahmens oder Gehäuses fest an Führungschiene anliegt und sonst in radialer Richtung frei beweglich ist.

Ähnlich wie die Befestigung an einem Lagerzapfen sorgen auch eine oder mehrere Führungsschienen für eine zwangsweise Bewegung des beweglichen Rades in bestimmte Richtungen, wobei wiederum die entlang des Zugmittels wirkende Kraft für eine Verschiebung des beweglichen Rades sorgt und dieses mit dem festen Rad in Eingriff bringt.

In einer weiteren Ausführungsform gemäß der Erfindung ist vorgesehen, daß das bewegliche Rad bzw. der Führungsrand zwischen mindestens drei in Abstand voneinander befindlichen, bezüglich der Achse des festen Rades exzentrischen Anschlagnocken mit Spiel frei beweglich angeordnet ist und daB der maximale Abstand je zweier benachbarter Nocken kleiner ist als der Durchmesser des beweglichen Rades bzw. des kreisförmigen Führungsrandes.

Auch in diesem Fall wird durch einen Zug am Zugmittel das frei bewegliche Rad mit dem festen Rad in Verbindung gebracht, wobei jedoch die Zahl der Freiheitsgrade für die Bewegung des Rades in einer zur Achse senkrechten Richtung größer ist als in den beiden vorgenannten Fällen. Der Abstand der Nocken ist dabei so gewählt, daß das Rad einerseits genügend Spielraum hat um mit dem bezüglich seiner Achse festen Rad in kraftschlüssige Verbindung zu treten, andererseits aber auch zumindest in der konzentrischen Lage durch mindestens zwei Nocken gleichzeitig abgestützt wird, deren Abstand dementsprechend kleiner sein muß als der Durchmesser des beweglichen Rades bzw. des kreisförmigen Führungsrandes, welcher sich zwischen den Nocken bewegt.

Bei einer Ausführungsform mit beweglichem Außenrad ist erfindungsgemäß vorgesehen, daß das Außenrad mit einem nach innen ragenden Bund unter das mit der Wickelwelle verbunene Innenrad faßt.

Durch diese Maßnahme wird das Außenrad in axialer Richtung gesichert.

In ähnlicher Weise kann man eine Sicherung des beweglichen Außenrades erfindungsgemäß dadurch erreichen, daß das Innenrad einen nach außen ragenden Bund, der über den Innenrand des Außenrades reicht, aufweist.

Bevorzugt wird die axiale Sicherung des beweglichen Rades erfindungsgemäß dadurch erreicht, daß eine am Rahmen bzw. Gehäuse befestigte Abdeckung, die über das bewegliche Rad reicht, vorgesehen ist. Eine zweckmäßige Ausführungsform der erfindungsgemäßen Kupplungsvorrichtung ist dadurch gekennzeichnet, daß das Innen- und das Außenrad aus Kunststoff oder Gummi gefertigt sind, bzw. einen Kunststoffoder Gummibelag aufweisen.

Bei dieser Ausführungsform wird das während des Rückstrammvorganges auf die Räder wirkende Drehmoment durch Reibschluß übertragen. Die entsprechenden Räder können bei Verwendung der genannten Materialien recht einfach und billig hergestellt werden.

Bei einer weiteren zweckmäßigen Ausführungsform gemäß der Erfindung ist vorgesehen, daß ein Rad aus Kunststoff oder Gummi gefertigt ist, bzw. einen Kunststoff- oder Gummibelag aufweist und das andere aus Metall gefertigt und mit einer Verzahnung versehen ist.

Hierbei kann die Verzahnung sich in die relativ weiche Gummi- bzw. Kunststoffoberfläche eindrücken, wodurch die Kraftschlüssigkeit der Verbindung in besserer Weise sichergestellt wird.

In der bevorzugten Ausführungsform einer Kupplungsvorrichtung gemäß der Erfindung ist vorgesehen, daß das Innenrad eine Außenverzahnung und das Außenrad eine Innenverzahnung aufweist, wobei beide Verzahnungen vorzugsweise als Evolventenverzahnung ausgeführt sind. Auf diese Weise erfolgt die Drehmoment- bzw. Kraftübertragung formschlüssig. Daher wird in dieser Ausführungsform jeglicher Schlupf zwischen Außenrad und Innenrad sicher vermieden.

Zweckmäßigerweise ist nach der Erfindung vorgesehen, daß das fest mit dem Zugmittel verbundene bewegliche Rad als Aufwickelvorrichtung eine umlaufende Nut aufweist.

Eine solche Nut sorgt für eine abrutschsichere Aufnahme des Zugmittels bzw. Zugseiles.

Bei der bevorzugten Ausführungsform der Erfindung ist dabei vorgesehen, daß die umlaufende Nut nicht konzentrisch sondern im axialen Queschnitt näherungsweise in Form einer archimedischen Spirale verläuft.

Auf diese Weise ändert sich das Übersetzungsverhältnis während des Rückstrammvorganges allmählich. Dies ist deshalb vorteilhaft, weil die anfängliche sehr große Antriebskraft der Antriebsvorrichtung zunächst in Beschleunigungsarbeit umgesetzt werden muß, wobei jedoch wegen der kleineren Übersetzung nur ein verhältnismäßig kleines Stück des Gurtes aufgewickelt wird, wogegen die spätere geringere Kraft der Antriebsvorrichtung ausreicht, um den Bewegungszustand aufrechtzuhalten, wobei wegen des nun vergrößerten Übersetzungsverhältnisses vergleichsweise viel Gurtmaterial aufgewickelt wird.

In der bevorzugten Ausführungsform ist weiterhin vorgesehen, daß das bewegliche Rad bzw. seine bewegliche Halterung in seiner konzentrischen Lage durch Scherstifte gesichert ist.

Diese Scherstifte haben die Aufgabe, das mit dem Zugmittel verbundene bewegliche Rad im Normalzustand in seiner zum festen Rad konzentrischen Lage zu halten. Darüberhinaus verhindern am beweglichen Rad angebrachte Scherstifte auch die Drehung desselben um seine eigene Achse. Dies hat wiederum den Vorteil, daß bei der Auslösung der Rückstrammeinrichtung in einer Unfallsituation das Zugmittel zunächst nicht die Drehung des beweglichen Rades um seine eigene Achse sondern ein Verschieben des Rades in radialer Richtung bewirken, wodurch es schneller mit dem festen Rad in Eingriff kommt. Die Scherstifte, die vorzugsweise aus Kunststoff sind, sind dabei so dimensioniert, daß sie bei dem weiteren Anzug des Zugmittels leicht abscheren, so daß nach dem Kraftschluß mit dem festen Rad das bewegliche Rad drehbar ist.

Weitere Vorteile, Merkmale und Anwendungsmöglichkeiten der vorliegenden Erfindung ergeben sich aus der nachfolgenden Beschreibung bevorzugter Ausführungsformen und den dazugehörigen Zeichnungen.

Es zeigen:

Figur 1 die Seitenansicht einer Kupplungsvorrichtung gemäß der Erfindung mit einem schwenkbaren, beweglichen Außenrad,

Figur 2 einen Querschnitt entlang der Linie II—II in Figur 1,

Figur 3 die gleiche Ansicht wie Figur 1 während eines Rückstrammvorganges,

Figur 4 die gleiche Ansicht wie Figur 1 für eine Ausführungsform mit Kulissenführung,

Figur 4a ein Außenrad mit Bund und

Figur 5 die gleiche Ansicht wie Figur 1, jedoch hier eine Ausführungsform mit Anschlagnocken.

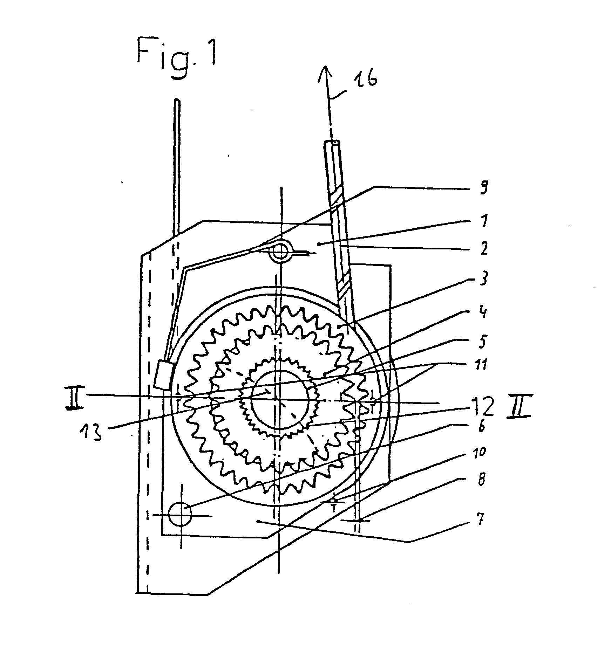

In Figur 1 erkennt man in der Seitenansicht die Kupplungsvorrichtung für die Wickelwelle eines Sicherheitsgurtaufrollers mit Rückstrammeinrichtung. Im Zentrum der Anordnung erkennt man die Wickelwelle 5, die über eine Zahnverbindung 12 fest mit dem Innenrad 4 verbunden ist. Das Innenrad 4 weist an seinem Außenrand eine Verzahnung auf, die von einer entsprechenden Innenverzahnung des Außenrades 3 im Ruhezustand im wesentlichen konzentrisch umgeben ist. Dabei ist der Begriff "konzentrisch" in diesem Zusammenhang so auszulegen, daß in dieser Lage das sich drehende Innenrad das Außenrad nicht berührt. Je weniger Spiel zwischen Innen- und Außenrad vorhanden ist, desto besser muß die konzentrische Ausrichtung der beiden Räder sein und umgekehrt.

Das Außenrad 3 ist in einer Lagerplatte 7 drehbar gelagert. Die Lagerplatte 7 ist ihrerseits um den exzentrisch angeordneten Zapfen 6 schwenkbar. Bei der Schwenkbewegung um den Zapfen 6 bewegt sich die Achse des Außenrades entlang der gestrichelt eingezeichneten Linie 13. Die Schwenkbewegung kann soweit geführt werden, bis die Verzahnung des Außen- und des Innenrades fest ineinandergreifen.

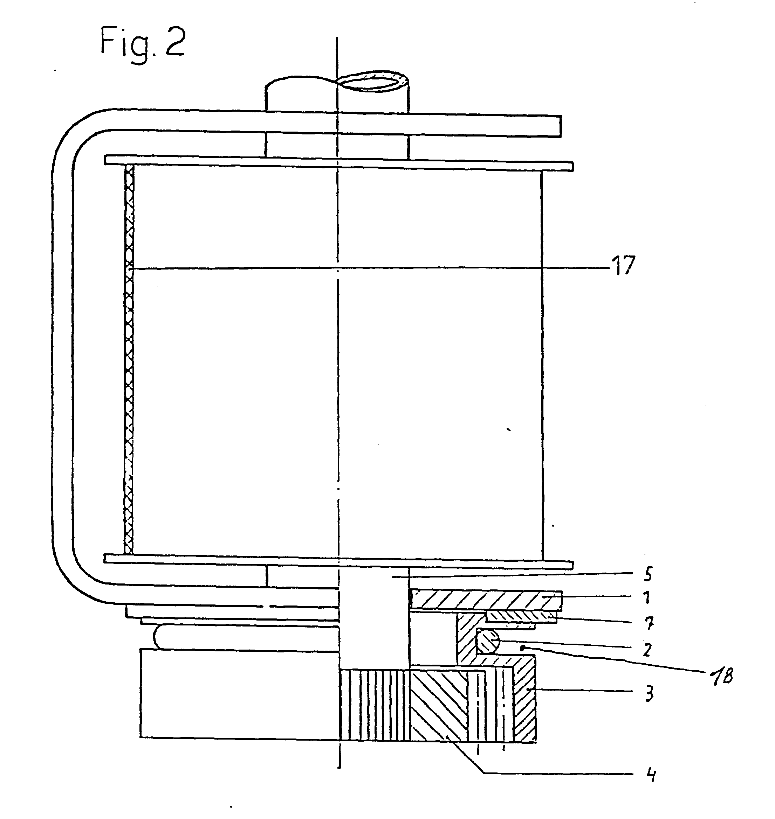

Der Winkel zwischen der Verbindungslinie der Zapfenachse und der Achse des Innenrades 4 zur Zugrichtung 16 des Zugseiles 2 beträgt etwa 45° und kann durch eine entsprechende Anbringung des Zapfens 6 über einen weiten Bereich variiert werden. Der Winkel sollte jedoch deutlich von 0° verschieden sein, da an sonsten durch den auf das Seil 2 ausgeübten Zug kein Drehmoment bezüglich der Zapfenachse auf das Außenrad 3 wirken würde und dieses nicht mit der Verzahnung des Innenrades 4 in Eingriff käme. Eine Feder 9 als Rückstellelement sorgt in Verbindung mit dem Anschlagstift 10 dafür, daß das Außenrad 3 im Normalzustand in seiner zum Innenrad 4 konzentrischen Lage bleibt. Die Scherstifte 11 dienen dazu, eine vorzeitige Drehung des Außenrades 3 bei Ausübung einer Zugkraft auf das Zugseil 2 zu verhindern, so daß zunächst eine Drehung der Lagerplatte 7 zusammen mit dem Außenrad 3 um den Zapfen 6 stattfindet und erst nach dem Eingriff der Verzahnung des Außenrades 3 in die Verzahnung des Innenrades 4 und dem weiteren Ansteigen der Zugkraft die Scherstifte abreißen und die Drehbewegung des Außenrades 3 und über die Verzahnung auch des Innenrades 4 und der damit verbundenen Wickelwelle 5 erlauben. Die gesamte Anordnung ist an einem Rahmen 1 befestigt, dessen U-förmiger Querschnitt in Figur 2 zu erkennen ist. Im inneren Bereich des U-förmigen Rahmens befindet sich der auf die Wickelwelle 5 aufgewickelte Gurt 17, von dem in Figur 2 nur die Endwicklung im Querschnitt schematisch dargestellt ist.

Die eben beschriebene Kupplungsvorrichtung ist außen an einem Schenkel des U befestigt und in Figur 2 ebenfalls im Querschnitt zu erkennen. In dieser Darstellung ist auch die Nut 18 zur Aufnahme des Seiles 2 sichtbar.

Das Zugseil 2 ist im allgemeinen ein Stahlseil, es kann jedoch auch ein Stahlband oder ein anderes, möglichst reißfestes Band oder Seil sein.

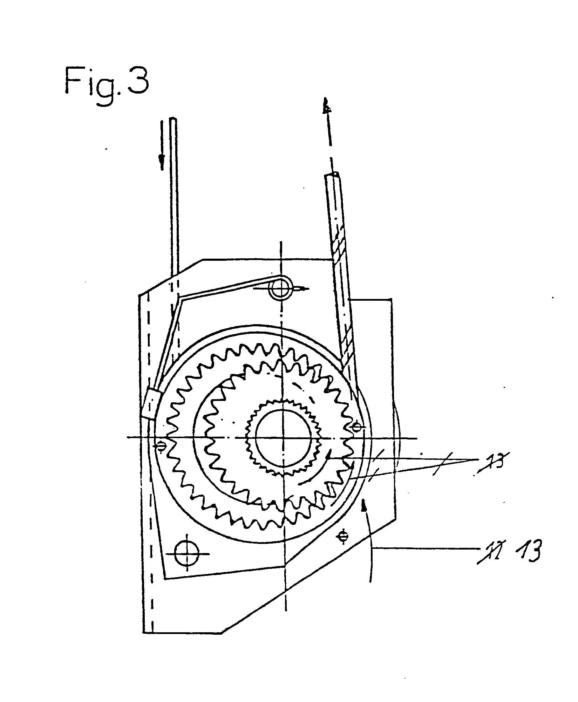

In Figur 3 ist die Kupplungsvorrichtung aus Figur 1 während eines Rückstrammvorganges zu erkennen. Das Zugseil 2 ist mit einer Antriebsvorrichtung verbunden, durch welche es mit großer Kraft nach oben gezogen wird. Dabei dreht sich, wie bereits beschrieben, zunächst die Lagerplatte 7 zusammen mit dem Außenrad 3 um den Zapfen 6, da das Zugseil 2 bezüglich des Zapfens 6 ein entsprechendes Drehmoment auf die Lagerplatte 7 bzw. auf das Außenrad 3 ausübt. Sobald das Außenrad mit seiner Verzahnung kraftschlüssig in die Verzahnung des Innenrades eingreift, wird dieses Drehmoment durch das Lager des Innenrades 4 bzw. der damit fest verbundenen Wickelwelle 5 aufgefangen, wobei jedoch nachwievor bezüglich der Achse des Außenrades 3 ein Drehmoment wirkt, durch welches die Scherstifte 11 abgeschert werden, so daß das Außenrad 3 durch das sich mit großer Zugkraft nach oben bewegende und dabei von dem Außenrad 3 abwikkelnde Zugseil 2 gedreht wird. Über die Verzahnung werden dabei das Innenrad 4 und die Wickelwelle 5 mitgedreht, so daß der Gurt 17 aufgewickelt wird. Sobald die Zugbelastung des Zugseiles 2 nachgelassen bzw. aufgehört hat, wird das Außenrad 3 zusammen mit der Lagerplatte 7 durch die Feder 9 in seine Ausgangslage zurückgeschwenkt. Auf diese Weise können nach dem Rückstrammvorgang das Innenrad 4 und die Wickelwelle 5 wieder frei drehen und werden nicht durch das Außenrad 3 blockiert.

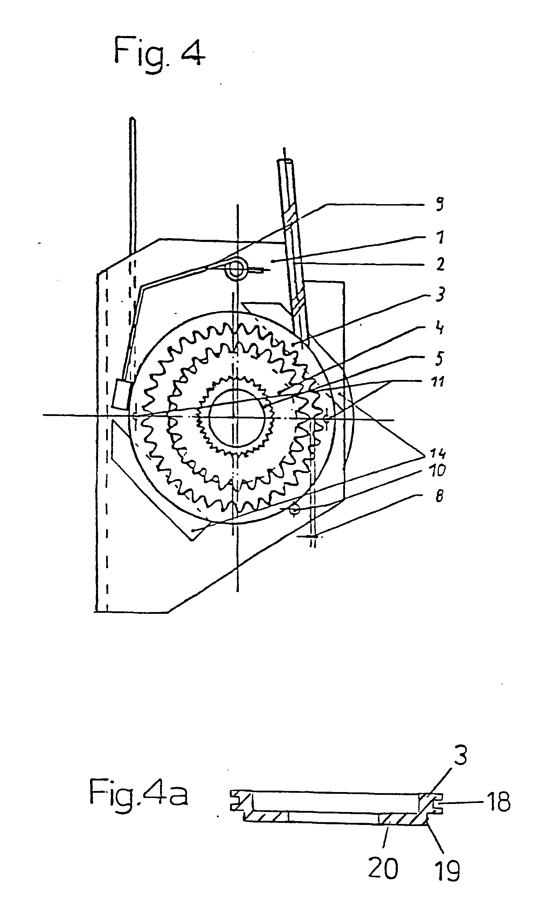

Figur 4 zeigt eine Ausführungsform, die bis auf die Lagerung des Außenrades 3 mit der Ausführungsform nach den Figuren 1 bis 3 identisch ist. Jedoch ist in diesem Fall das Außenrad 3 nicht in einer Lagerplatte 7 drehbar gelagert, sondern es wird zwischen zwei Schienen bzw. Kulissen gleitbar und drehbar geführt. Dabei gleitet das Außenrad 3 an einem in axialer Richtung überstehenden kreisförmigen Führungsrand, dessen Durchmesser gerade dem Abstand der beiden gegenüberliegenden Schienen 14 bzw. Kulissen entspricht. Die exzentrische Lagerung des Außenrades 3 ist hierbei gegeben durch die Berührungspunkte des Führungsrandes 19 mit den Schienen 14.

Der Führungsrand 19 ist dabei der Außenrand eines kreisringförmigen Bundes 20, welcher unter das Innenrad 4 greift und so das Außenrad 3 in axialer Richtung sichert. Der Querschnitt des oben beschriebenen Außenrades 3 ist in Figur 4a dargestellt. Auch bei dieser Ausführungsform bewegt sich durch einen kräftigen Zug am Seil 2 das Außenrad 3 zwischen den Kulissen in Richtung auf die Feder 9, bis seine Verzahnung in die Verzahnung des Innenrades 4 eingreift. Nun werden die Scherstifte 11 abgeschert, so daß das Außenrad 3 durch das sich mit großer Zugkraft nach oben bewegende und dabei von dem Außenrad 3 abwickelnde Zugseil 2 gedreht wird. Nach dem Rückstrammvorgang wird auch hier das Außenrad 3 durch die Feder 9 in seine Ausgangsstellung zurückgedrückt, wobei ein Anschlagstift 10 die konzentrische Lage des Außenrades 3 zum Innenrad 4 fixiert.

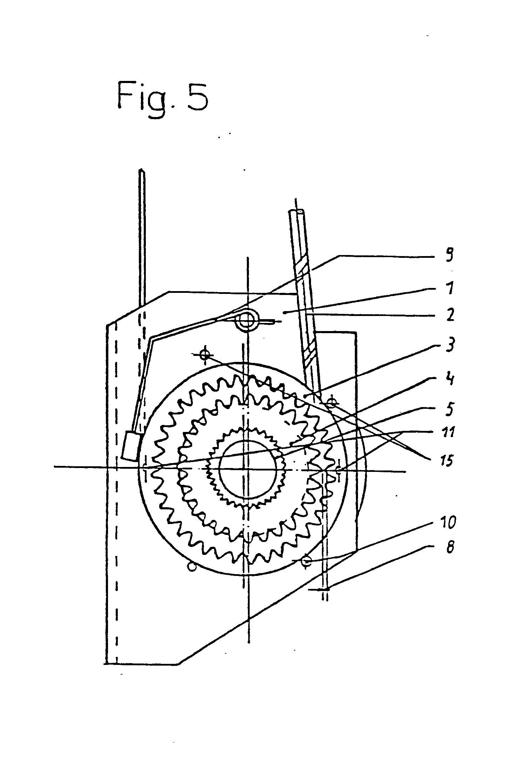

In Figur 5 ist schließlich eine Ausführungsform dargestellt, bei der das Außenrad 3 zwischen Anschlagnocken 15 mehr oder weniger frei beweglich ist, wobei es durch die Feder 9 und einige der Anschlagnocken sowie auch durch die Scherstifte 11 im Ausgangszustand zunächst fixiert ist. Der kräftige Zug am Zugseil 2 zieht auch hier das Außenrad 3 mit seiner Verzahnung auf die Verzahnung des Innenrades 4, nun werden die Scherstifte 11 abgeschert, so daß das Außenrad 3 durch das sich mit großer Zugkraft nach oben bewegende und dabei von dem Außenrad 3 abwickelnde Zugseil 2 gedreht wird. Die Lagerpunkte, bezüglich derer ein Drehmoment wirkt, durch welches die Verzahnung des Außenrades 3 an die Verzahnung des Innenrades 4 angepreßt wird, sind dabei gegeben durch einen oder mehrere der Anschlagnocken. Die Feder 9 drückt auch hier nach beendetem Rückstrammvorgang das Außenrad 3 in seine ursprüngliche Lage zurück.

## Patentansprüche

1. Kupplungsvorrichtung für die Wickelwelle (5) eines Sicherheitsgurtaufrollers mit Rückstrammeinrichtung, mit einem Rahmen (1) und/oder einem Gehäuse für die Befestigung und Aufnahme der Aufrollautomatik und wenigstens eines Teiles der Rückstrammeinrichtung, mit einem flexiblen Zugmittel (2), welches an einem Ende fest mit einer Antriebsvorrichtung in Verbindung steht, mit einem drehbar gelagerten Außenrad (3) und einem ebenfalls drehbar gelagerten Innrad (4), deren Achsen im wesentlichen parallel zur Achse der Wickelwelle (5) verlaufen, von denen eines mit der Wickelwelle (5) fest verbunden ist und das andere eine Wickelvorrichtung für das Zugmittel aufweist und zumindest unter Zugbelastung mit dem anderen Ende des Zugmittels (2) fest verbunden ist und welche im Ausgangszustand im wesentlichen konzentrisch zueinander angeordnet sind, dadurch gekennzeichnet, daß das Außenrad (3) und das Innenrad (4) durch eine Zugbelastung des Zugmittels (2) im wesentlichen senkrecht zu ihren Achsen relativ zueinander beweglich angeordnet sind, daß nach einer entsprechenden Verschiebung mindestens einer der beiden Achsen durch eine Zugbelastung des Zugmittels (2) die Außenseite des Innenrades (4) mit der Innenseite des Außenrades (3) kraftschlüssig in Verbindung steht und daß die Verbindung zwischen Außenrad (3) und Innenrad (4) durch eine Rückholanordnung wieder trennbar ist.

2. Kupplungsvorrichtung nach Anspruch 1, dadurch gekennzeichnet, daß die Rückholanordnung zum Aufbringen einer Rückstellkraft in Richtung der Verbindungslinie der beiden relativ zueinander verschobenen Achsen im wesentlichen aus einer Feder (9) besteht, welche mit ihrem einen Ende an dem Außenrad (3) bzw. dessen Lager und/oder damit fest verbundenen Teilen und mit ihrem anderen Ende an dem Innenrad (4) bzw. dessen Lager und/oder damit fest verbundenen Teilen angreift.

3. Kupplungsvorrichtung nach Anspruch 1 oder 2, dadurch gekennzeichnet, daß das Innenrad (4) fest mit der Wickelwelle (5) verbunden und das Außenrad (3) mit dem Zugmittel verbunden und in einer zu seiner Achse im wesentlichen senkrechten Ebene relativ zur bezüglich des Rahmens (1) ortsfesten Achse des Innenrades (4) beweglich ist.

4. Kupplungsvorrichtung nach Anspruch 1 oder 2, dadurch gekennzeichnet, daß das Außenrad (3) fest mit der Wickelwelle (5) verbunden ist und daß das Innenrad mit dem Zugmittel (2) verbunden und in einer zu seiner Achse im wesentlichen senkrechten Ebene relativ zur bezüglich des Rahmens (1) ortsfesten Achse des Außenrades (3) beweglich ist.

5. Kupplungsvorrichtung nach Anspruch 3 oder 4, dadurch gekennzeichnet, daß das kraftschlüssig mit dem bezüglich seiner Achsenlage festen Rad (4, 3) in Verbindung stehende bewegliche Rad (3, 4) bei entlastetem Zugmittel (2) bezüglich einer durch den Schwerpunkt des beweglichen Rades (3, 4) und der mit ihm beweglichen Teile (7) verlaufenden, vertikalen Linie einseitig in einem Punkt gelagert ist und daß dieses Rad (3, 4) in der zum festen Rad (4, 3) konzentrischen Lage in mindestens zwei Punkten stabil gelagert ist.

6. Kupplungsvorrichtung nach einem oder mehreren der Ansprüche 3 bis 5, dadurch gekennzeichnet, daß das bewegliche Rad (3, 4) in einer Lagerplatte (7) gelagert ist, die um einen exzentrisch zum beweglichen Rad liegenden Zapfen (6) in einer zur Achse des beweglichen Rades (3, 4) im wesentlichen senkrechten Ebene schwenkbar angeordnet ist.

7. Kupplungsvorrichtung nach einem oder mehreren der Ansprüche 3 bis 5, dadurch gekennzeichnet, daß das bewegliche Rad (3, 4) mit seiner Außenseite oder mit einem in axialer Richtung über das bewegliche Rad hinausragenden kreisförmigen Führungsrand (19) an mindestens einer bezüglich des Rahmens (1) oder Gehäuses festen Führungsschiene (14) anliegt und ansonsten in radialer Richtung frei beweglich ist.

8. Kupplungsvorrichtung nach einem oder mehreren der Ansprüche 3 bis 5, dadurch gekennzeichnet, daß das bewegliche Rad (3, 4) bzw. sein Führungsrand (19) zwischen mindestens drei in Abstand voneinander befindlichen bezüglich der Achse des festen Rades (4, 3) exzentrischen Anschlagnocken (15) mit Spiel frei beweglich angeordnet ist und daß der maximale Abstand je zweier benachbarter Anschlagnocken (15) kleiner ist als der Durchmesser des beweglichen Rades (3, 4) bzw. des Führungsrandes (19).

9. Kupplungsvorrichtung nach einem der Ansprüche 1 bis 3 oder 5 bis 8, dadurch gekennzeichnet, daß das Außenrad (3) mit einem nach innen ragenden Bund (20) unter das mit der Wickelwelle (5) verbundene Innenrad (4) faßt.

10. Kupplungsvorrichtung nach einem der Ansprüche 1 bis 3 oder 5 bis 8, dadurch gekennzeichnet, daß das Innenrad (4) einen nach außen ragenden Bund (20), welcher über den Innenrand des Außenrades (3) reicht, aufweist.

11. Kupplungsvorrichtung nach einem der Ansprüche 1 bis 8, dadurch gekennzeichnet, daß zur axialen Sicherung des beweglichen Rades (3, 4) eine am Rahmen (1) bzw. Gehäuse befestigte Abdeckung, die über das bewegliche Rad (3, 4) reicht, vorgesehen ist.

12. Kupplungsvorrichtung nach einem oder mehreren der Ansprüche 1 bis 11, dadurch gekennzeichnet, daß das Innenrad (4) und das Außenrad (3) aus Kunststoff oder Gummi gefertigt sind bzw. einen Kunststoff- oder Gummibelag aufweisen.

13. Kupplungsvorrichtung nach einem oder mehreren der Ansprüche 1 bis 11, dadurch gekennzeichnet, daß ein Rad (3, 4) aus Kunststoff oder Gummi gefertigt ist bzw. einen Kunststoff- oder Gummibelag aufweist und daß das andere Rad (4, 3) aus Metall gefertigt und mit einer Verzahnung versehen ist.

14. Kupplungsvorrichtung nach einem oder mehreren der Ansprüche 1 bis 11, dadurch gekennzeichnet, daß beide Räder aus Metall gefertigt sind und daß das Innenrad (4) eine Außenverzahnung und das Außenrad (3) eine Innenverzahnung aufweist, wobei die jeweilige Verzahnung vorzugsweise einen Evolventenverzahnung ist.

15. Kupplungsvorrichtung nach einem oder mehreren der Ansprüche 1 bis 14, dadurch gekennzeichnet, daß das bewegliche Rad (3), welches fest mit dem Zugmittel (2) verbunden ist, an seinem Außenrand bzw. an einer Aufwickelvorrichtung mit einer umlaufenden Nut versehen ist.

16. Kupplungsvorrichtung nach Anspruch 15, dadurch gekennzeichnet, daß die umlaufende Nut im axialen Querschnitt näherungsweise die Form einer archimedischen Spirale hat.

17. Kupplungsvorrichtung nach einem oder mehreren der Ansprüche 1 bis 16, dadurch gekennzeichnet, daß das bewegliche Rad (3, 4) in der zum anderen Rad (4, 3) konzentrischen Lage durch am Rad (3, 4) und am Rahmen (1) oder Gehäuse und/oder einer Lagerplatte (7) befestigte Scherstifte gesichert ist, welche durch die vom Zugmittel (2) auf das Rad (3, 4) übertragenen Kräfte abscherbar sind.

## Revendications

1. Dispositif d'accouplement pour l'arbre enrouleur (5) de l'enrouleur d'un ceinture de sécurité avec dispositif de retenue, comportant un cadre (1) et/ou une enveloppe pour la fixation et le logement de l'automatisme d'enroulement et d'au moins une partie du dispositif de retenue, avec un organe de traction souple (2), qui en une extrémité est lié à demeure à un dispositif d'entraînement, avec une roue extérieure (3), logée de façon à pouvoir subir une rotation, et avec une roue intérieure (4), logée elle aussi de façon à pouvoir subir une rotation, dont les axes courent pour l'essentiel parallèlement à l'axe de l'arbre enrouleur (5), dont l'une est liée à demeure à l'arbre enrouleur (5) et l'autre présente un dispositif d'enroulement (5) et l'autre présente un dispositif d'enroulement pour l'organe de traction et est liée à demeure, au moins sous l'effet d'une contrainte de traction, à l'autre extrémité de l'organe de traction (2), et qui, dans leur position initiale, sont disposées essentiellement concentriquement l'une par rapport à l'autre, caractérisé en ce que la roue extérieure (3) et la roue intérieure (4) sont disposées de façon, sous l'effet d'une contrainte de traction de l'organe de traction (2), à pouvoir se déplacer l'une par rapport à l'autre, d'une manière essentiellement perpendiculaire à leur axe; que, après un déplacement correspondant d'au moins l'un des deux axes sous l'effet d'une contrainte de traction de l'organe de traction (2), la face extérieure de la roue intérieure (4) est en liaison dynamique avec la face intérieure de la roue extérieure (3); et que la liaison entre la roue extérieure (3) et la roue intérieure (4) peut être de nouveau séparée à l'aide d'un dispositif de rappel.

2. Dispositif d'accouplement selon la revendication 1, caractérisé en ce que le dispositif de rappel, destiné à appliquer une force de rappel dans la direction de la ligne de liaison des deux axes déplacés l'un par rapport à l'autre, est essentiellement constitué d'un ressort (9), lequel, par l'une de ses extrémités, est en prise avec la roue extérieure ou son support et/ou les pièces qui y sont liées à demeure, et, par son autre extrémité, est en prise avec la roue intérieure (4) ou son support et/ou les pièces qui lui sont liées à demeure.

3. Dispositif d'accouplement selon la revendication 1 ou 2, caractérisé en ce que la roue intérieure (4) est liée à demeure à l'arbre enrouleur (5), et que la roue extérieure (3) est liée à l'organe de traction et, dans un plan essentiellement perpendiculaire à son axe, peut se déplacer par rapport à l'axe, fixe par rapport au cadre (1), de la roue intérieure (4).

4. Dispositif d'accouplement selon la revendication 1 ou 2, caractérisé en ce que la roue extérieure (3) est liée à demeure à l'arbre enrouleur (5), et que la roue intérieure est liée à l'organe de traction (2) et, dans un plan essentiellement perpendiculaire à son axe, peut se déplacer par rapport à l'axe, fixe par rapport au cadre (1), de la roue extérieure (3).

5. Dispositif d'accouplement selon la revendication 3 ou 4, caractérisé en ce que la roue mobile (3, 4), en liaison dynamique avec la roue (4, 3), fixe par rapport à la position de son axe, est, quand l'organe de traction (2) est détendu, logée en un point situé sur un côté d'une ligne verticale passant par le centre de gravité de la roue mobile (3, 4) et celui des pièces (7) mobiles avec cette dernière, et que cette roue (3, 4) est logée d'une manière stable, en au moins deux points, dans la position concentrique à la roue fixe (4, 3).

6. Dispositif d'accouplement selon l'une ou plusieurs des revendications 3 à 5, caractérisé en ce que la roue mobile (3, 4) est logée dans une plaque d'appui (7), qui est disposée de façon à pouvoir pivoter autour d'un pivot (6), disposé d'une manière excentrique par rapport à la roue mobile, dans un plan essentiellement perpendiculaire à l'axe de la roue mobile (3, 4).

7. Dispositif d'accouplement selon l'une ou plusieurs des revendications 3 à 5, caractérisé en ce que la roue mobile (3, 4) s'appuie, par sa face extérieure ou par un bord de guidage (19), circulaire, dépassant dans le sens axial au-delà de la roue mobile, contre un rail de guidage (14), fixe par rapport au cadre (1) ou à l'enveloppe, et pour le reste peut se déplacer librement dans le sens radial.

8. Dispositif d'accouplement selon l'une ou plusieurs des revendications 3 à 5, caractérisé en ce que le roue mobile (3, 4) ou son bord de guidage (19) est disposée de façon à pouvoir se déplacer librement, avec un jeu, entre au moins trois cames de butée (15), disposées à une certaine distance les unes des autres et excentriquement par rapport à l'axe de la roue fixe (4, 3), et que la distance maximale entre deux cames de butée voisines (15) est inférieure au diamètre de la roue mobile (33, 4) ou du bord de guidage (19).

9. Dispositif d'accouplement selon l'une des revendications 1 à 3 ou 5 à 8, caractérisé en ce que la roue extérieure (3) entre en prise avec une collerette (20), dépassant vers l'intérieur, en-dessous de la roue intérieure (4) liée à l'arbre enrouleur (5).

10. Dispositif d'accouplement selon l'une des revendications 1 à 3 ou 5 à 8, caractérisé en ce que la roue intérieure (4) présente une collerette (4), dépassant vers l'extérieur, et qui passe sur le bord intérieur de la roue extérieure (3).

11. Dispositif d'accouplement selon l'une des revendications 1 à 8, caractérisé en ce que, pour la sûreté axiale de la roue mobile (3, 4), est prévu un chapeau, fixé au cadre (1) ou à l'enveloppe, et qui dépasse la roue mobile (3, 4).

12. Dispositif d'accouplement selon l'une ou plusieurs des revendications 1 à 11, caractérisé en ce que la roue intérieure (4) et la roue extérieure (3) sont en plastique ou en caoutchouc ou présentent un revêtement en plastique ou en caoutchouc.

13. Dispositif d'accouplement selon l'une ou plusieurs des revendications 1 à 11, caractérisé en ce qu'une roue (3, 4) est fabriquée en caoutchouc ou en plastique, ou comporte un revêtement en caoutchouc ou en plastique, et que l'autre roue (4, 3) est métallique et est pourvue d'un engrenage.

14. Dispositif d'accouplement selon l'une ou plusieurs des revendications 1 à 11, caractérisé en ce que les deux roues sont fabriquées en métal, et que la roue intérieure (4) présente un engrenage extérieur et la roue extérieure (3) présente un engrenage intérieur, chaque engrenage étant de préférence un engrenage à développante.

15. Dispositif d'accouplement selon l'une ou plusieurs des revendications 1 à 14, caractérisé en ce que la roue mobile (3), qui est liée à demeure à l'organe de traction (2), est pourvue sur son bord extérieur, ou sur un dispositif d'enroulement, d'une rainure continue.

16. Dispositif d'accouplement selon la revendication 15, caractérisé en ce que la rainure continue présente en coupe axiale approximativement la forme d'une spirale d'Archimède.

17. Dispositif d'accouplement selon l'une ou plusieurs des revendications 1 à 16, caractérisé en ce que la roue mobile (3, 4) est, dans la position concentrique par rapport à l'autre roue (4, 3), assurée par des boulons de cisaillement, fixés à la roue (3, 4) ou au cadre (1) ou à l'enveloppe et/ou à une plaque d'appui (7), boulons qui peuvent être cisaillés sous l'effet des forces transmises de l'organe de traction (2) à la roue (3, 4).

**Claims**

1. A coupling arrangement for the winding shaft (5) of a safety belt winder with take-up tensioning means, comprising a frame (1) and/or a housing for fixing and receiving the automatic winder and at least a part of the take-up tensioning means, a flexible pulling means (2) which at one end is fixedly connected to a drive means, a rotatably mounted outer wheel (3) and an also rotatably mounted inner wheel (4), the axes of which extend substantially parallel to the axis of the winding shaft (5), of which one is fixedly connected to the winding shaft (5) and the other has a winding means for the pulling means and is fixedly connected at least under a pulling loading to the other end of the pulling means (2), and which in the initial condition are arranged substantially concentrically relative to each other, characterised in that the outer wheel (3) and the inner wheel (4) are arranged movably relative to each other substantially perpendicularly to their axes by a pulling loading of the pulling means (2), that after a corresponding displacement of at least one of the two axes due to a pulling loading of the pulling means (2) the outside of the inner wheel (4) is force-lockingly connected to the inside of the outer wheel (3) and that the connection between the outer wheel (3) and the inner wheel (4) can be separated again by a return arrangement.

2. A coupling arrangement according to claim 1 characterised in that the return arrangement for applying a resetting force in the direction of the line connecting the two axes which are displaced relative to each other substantially comprises a spring (9) which with its one end engages the outer wheel (3) or the mounting thereof and/or portions fixedly connected thereto while with its other end it engages the inner wheel (4) or the mounting thereof and/or portions fixedly connected thereto.

3. A coupling arrangement according to claim 1 or claim 2 characterised in that the inner wheel (4) is fixedly connected to the winding shaft (5) and the outer wheel (3) is connected to the pulling means and is movable in a plane substantially perpendicular to its axis, relative to the axis of the inner wheel (4), the inner wheel axis being stationary with respect to the frame (1).

4. A coupling arrangement according to claim 1 or claim 2 characterised in that the outer wheel (3) is fixedly connected to the winding shaft (5) and that the inner wheel is connected to the pulling means (2) and is movable in a plane substantially perpendicular to its axis, relative to the axis of the outer wheel (3), which outer wheel axis is stationary relative to the frame (1).

5. A coupling arrangement according to claim 3 or claim 4 characterised in that the movable wheel (3, 4) which is force-lockingly connected to the wheel (4, 3) which is fixed in relation to the position of its axis, when the pulling means (2) is relieved of load, is mounted at a point on one side in relation to a vertical line extending through the centre of gravity of the movable wheel (3, 4) and the portions (7) which are movable therewith, and that said wheel (3, 4) is stably mounted at at least two points in the position which is concentric with respect to the fixed wheel (4, 3).

6. A coupling arrangement according to one or more of claims 3 to 5 characterised in that the movable wheel (3, 4) is mounted in a mounting plate (7) which is arranged pivotably about a trunnion (6) disposed eccentrically with respect to the movable wheel, in a plane which is substantially perpendicular to the axis of the movable wheel (3, 4).

7. A coupling arrangement according to one or more of claims 3 to 5 characterised in that the movable wheel (3, 4) bears with its outside or with a circular guide edge (19) which projects in the axial direction beyond the movable wheel, against at least one guide rail (14) which is fixed with respect to the frame (1) or housing, and is otherwise freely movable in a radial direction.

8. A coupling arrangement according to one or more of claims 3 to 5 characterised in that the movable wheel (3, 4) or its guide edge (19) is arranged freely movably with play between at least three stop projections (15) which are disposed at spacings from each other and which are eccentric with respect to the axis of the fixed wheel (4, 3), and that the maximum spacing between each two adjacent stop projections (15) is less than the diameter of the movable wheel (3, 4) or the guide edge (19).

9. A coupling arrangement according to one of claims 1 to 3 or 5 to 8 characterised in that the outer wheel (3) engages with an inwardly projecting collar (20) under the inner wheel (4) which is connected to the winding shaft (5).

10. A coupling arrangement according to one of claims 1 to 3 or 5 to 8 characterised in that the inner wheel (4) has an outwardly projecting collar (20) which extends over the inner edge of the outer wheel (3).

11. A coupling arrangement according to one of claims 1 to 8 characterised in that a cover means which is secured to the frame (1) or the housing and which extends over the movable wheel (3, 4) is provided for axially securing the movable wheel (3, 4).

12. A coupling arrangement according to one or more of claims 1 to 11 characterised in that the inner wheel (4) and the outer wheel (3) are made from plastics or rubber or have a plastics or rubber coating.

13. A coupling arrangement according to one or more of claims 1 to 11 characterised in that one wheel (3, 4) is made from plastics or rubber or has a plastics or rubber coating and the other wheel (4, 3) is made from metal and is provided with teeth.

14. A coupling arrangement according to one or more of claims 1 to 11 characterised in that both wheels are made from metal and that the inner wheel (4) has an external tooth configuration and the outer wheel (3) has an internal tooth configuration, wherein the respective tooth configuration is preferably an involute tooth configuration.

15. A coupling arrangement according to one or more of claims 1 to 14 characterised in that the movable wheel (3) which is fixedly connected to the pulling means (2) is provided with a peripherally extending groove at its outer edge or at a winding-on means.

16. A coupling arrangement according to claim 15 characterised in that the peripherally extending groove is in axial cross-section approximately in the form of an Archimedes' spiral.

17. A coupling arrangement according to one or more of claims 1 to 16 characterised in that the movable wheel (3, 4) is secured in the position in which it is concentric with the other wheel (4, 3) by shearing pins which are secured to the wheel (3, 4) and to the frame (1) or housing and/or a mounting plate (7) and which can be sheared off by the forces transmitted from the pulling means (2) to the wheel (3, 4).

Fig. 1

## Fig. 2

17

5

1

7

2

18

3

4

Fig.3

# Fig. 4

# Fig.4a

Fig. 5